# EUROPEAN PATENT APPLICATION

(11) **EP 2 495 914 A1**
(43) Date of publication of application: **05.09.2012**
(21) Application number: 10826417.7
(22) Date of filing: 16.08.2010
(51) Int. Cl.: H04L 12/40, B60R 16/023, H04J 3/00

(54) **VEHICLE-MOUNTED NETWORK DEVICE**

(30) Priority: 27.10.2009 JP 2009246026
(71) Applicant: Hitachi Automotive Systems, Ltd., Hitachinaka-shi, Ibaraki 312-8503 (JP)
(72) Inventor: TSUNEDOMI Kunihiko, Hitachi-shi Ibaraki 319-1292 (JP); KUROSAWA Kenichi, Hitachinaka-shi Ibaraki 312-8503 (JP); NARISAWA Fumio, Hitachi-shi Ibaraki 319-1292 (JP); ISHIGOOKA Tasuku, Hitachi-shi Ibaraki 319-1292 (JP)
(74) Representative: MERH-IP Matias Erny Reichl Hoffmann
(86) International application number: PCT/JP2010/063824
(87) International publication number: WO 2011/052282

(57) **Abstract**

In order to correctly execute a control task in a FlexRay-based vehicle-mounted network system, data synchronization must be guaranteed by completing transmission/reception of all data within a communication cycle. The control task is called in synchronization with a communication cycle. Frames within a communication cycle are partitioned into a first-half slot group and a second-half slot group, each of which is a set of consecutive frames. During the slots of the first-half slot group, a data transmission/reception unit writes transmission frames of the second-half slot group and reads the reception frames of the second-half slot group. During the slots of the second-half slot group, the transmission/reception unit writes the transmission frames, and reads the reception frames, of the first-half slot group.

## Description

### TECHNICAL FIELD

The present invention relates to a real-time control network used in real-time processing. The present invention is applicable to a vehicle control network or an industrial computer.

### BACKGROUND ART

To guarantee realtime communication capability, a recent vehicle-mounted network tends to use an event-triggered communication network, or a time-synchronized communication network. For example, FlexRay mentioned in Patent Literature 1 is one of the time-synchronized communications. In FlexRay, one period of communication is called a communication cycle. A communication cycle is composed of multiple slots each of which is assigned in advance to each controller. The communication control unit of each controller, which synchronizes with other communication control units on a network, writes the frame of a specified slot into the reception buffer at the start of the slot to receive data from the network. The communication control unit reads data from the transmission buffer and transmits it to a slot, which is specified in advance, to transmit the data to the network.

### CITATION LIST

### PATENT LITERATURE

PATENT LITERATURE 1: JP-A-2008-509584

### SUMMARY OF INVENTION

### TECHNICAL PROBLEM

The correct execution of a control task in a FlexRay-based vehicle-mounted network system requires that the reception of input data used in one control cycle and the transmission of output data generated in one control cycle be completed in one control cycle to guarantee data synchronization. Failure to guarantee data synchronization generates a sampling period deviation, generating the problem that the control task control cannot be performed.

It is an object of the present invention to guarantee data synchronization by completing the reception of input data, which is used in one control cycle, and the transmission of output data, which is generated in one control cycle, in one control cycle.

### SOLUTION TO PROBLEM

To solve the above problem, the present invention provides a vehicle-mounted network device wherein a plurality of nodes are connected to a common network, each of the node includes a transmission buffer, a reception buffer, and communication control means, communication is performed in a fixed-period communication cycle, the communication cycle includes a plurality of slots each generated by dividing the communication cycle into a pre-specified communication time, and the communication control means uses a time division multiplex communication system that transmits and receives a frame, in which vehicle control data is included, via a pre-specified slot, wherein the communication control means performs transmission by reading from a transmission buffer and transmitting to a pre-specified slot and the communication control means performs reception by writing a frame in a pre-specified slot to a reception buffer, the node has a control task and data transmission/reception means and the control task is called at a pre-specified time in a communication cycle to receive input data, to perform control, and to transmit output data, the data transmission/reception means receives input data by performing a pre-specified conversion for a frame in a pre-specified reception buffer to generate input data, the data transmission/reception means transmits output data by performing a pre-specified conversion for output data to generate a frame and writing the frame into a pre-specified transmission buffer, the plurality of slots are divided into two, a first-half slot group and a second-half slot group, each composed of a set of one or more consecutive slots, and the data transmission/reception means performs transmission of output data corresponding to the first-half slot group of a certain communication cycle during the slots in the second-half slot group of the certain communication cycle and performs transmission of output data corresponding to the second-half slot group of the certain communication cycle during a time allocated the slots of the first-half slot group of a next communication cycle of the certain communication cycle.

The present invention also provides a vehicle-mounted network device, wherein a plurality of nodes are connected to a common network, each of the node includes a transmission buffer, a reception buffer, and communication control means, communication in the network is performed in a fixed-period communication cycle, the communication cycle includes a plurality of slots each generated by dividing the communication cycle into a pre-specified communication time, and the communication control means uses a time division multiplex communication system that transmits and receives a frame, in which vehicle control data is included, via a pre-specified slot, wherein the communication control means performs transmission by reading from a transmission buffer and transmitting to a pre-specified slot and the communication control means performs reception by writing a frame in a pre-specified slot to a reception buffer, the node has a control task and data transmission/reception means, the control task is called at a pre-specified time in a communication cycle to receive input data, to perform control, and to transmit output data, the data transmission/reception means receives input data by performing a pre-specified conversion for a frame in a pre-specified reception buffer to generate input data, the data transmission/reception means transmits output data by performing a pre-specified conversion for output data to generate a frame and writing the frame into a pre-specified transmission buffer, the communication cycle has an idle time during which no frame is transmitted/received from a time in the communication cycle to the end time of the communication cycle or in which there is no slot in the idle time, and during the idle time of the certain communication cycle, the data transmission/reception means transmits all output data, generated by the control task in the certain communication cycle, in a next communication cycle of the certain communication cycle.

### ADVANTAGEOUS EFFECTS OF INVENTION

The vehicle-mounted network device of the present invention completes the reception of input data, which is used in one control cycle, and the transmission of output data, which is generated in the one control cycle, in the one control cycle in a FlexRay-based vehicle-mounted network system, thus guaranteeing data synchronization.

### BRIEF DESCRIPTION OF DRAWINGS

- [FIG. 1]: Configuration diagram of first embodiment
- [FIG. 2]: Configuration diagram of second embodiment
- [FIG. 3]: Transmission buffer and reception buffer
- [FIG. 4]: Frame table
- [FIG. 5]: Frame transmission/reception table
- [FIG. 6]: Slot group transmission/reception table
- [FIG. 7]: Interrupt time table
- [FIG. 8]: Communication cycle of first embodiment
- [FIG. 9]: Sequence diagram of first embodiment
- [FIG. 10]: Flowchart of interrupt management unit
- [FIG. 11]: Flowchart of data transmission/reception unit
- [FIG. 12]: Flowchart of control task
- [FIG. 13]: Communication cycle of second embodiment
- [FIG. 14]: Determination method of slot ID of partitioning point
- [FIG. 15]: Flowchart of data transmission/reception unit
- [FIG. 16]: Sequence diagram of second embodiment
- [FIG. 17]: Interrupt time table
- [FIG. 18]: Flowchart of data transmission/reception unit
- [FIG. 19]: Sequence diagram of third embodiment

### DESCRIPTION OF EMBODIMENTS

The following describes embodiments of the present invention in detail.

### First embodiment

In a first embodiment, an embodiment will be described in which the control cycle and the communication cycle are made to synchronize, the slots in the communication cycle are partitioned into two slot groups, and a data transmission/reception unit 10 is executed for each slot group to transmit output data. The following describes this embodiment.

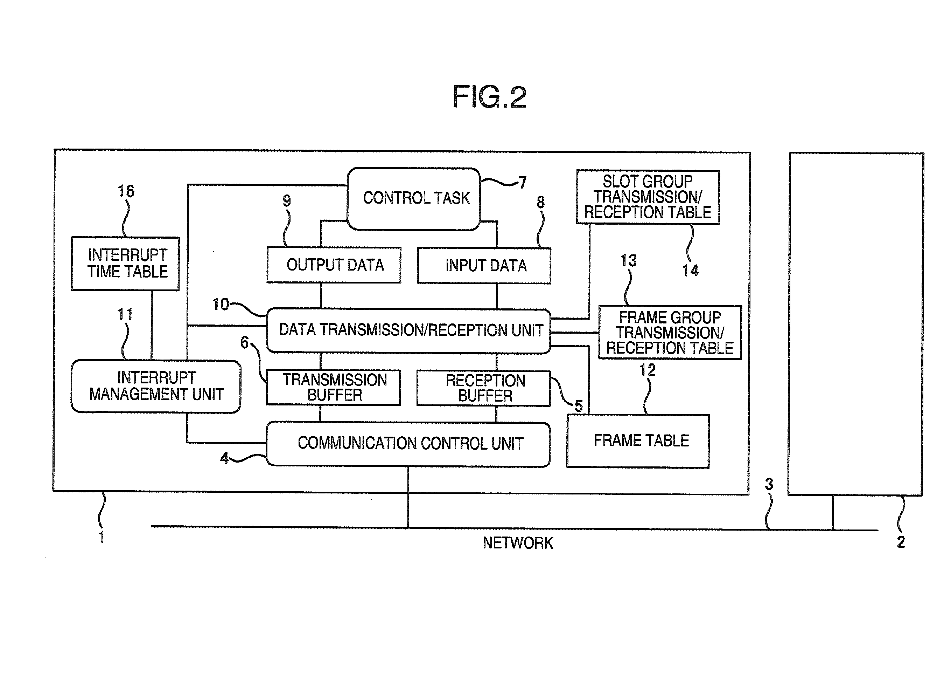

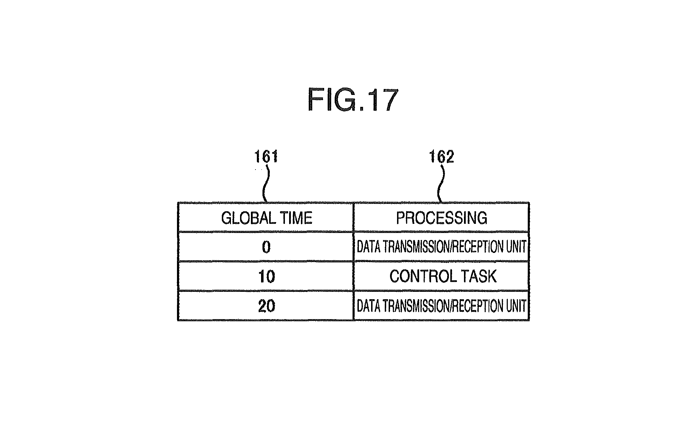

FIG. 2 shows the system configuration of the first embodiment. Controllers 1 and 2 are connected to a network 3. The number of controllers may be 3 or more. The controllers 1 and 2 each include a communication control unit 4, a reception buffer 5, a transmission buffer 6, a control task 7, input data 8, output data 9, a data transmission/reception unit 10, an interrupt management unit 11, a frame table 12, a frame group transmission/reception table 13, and an interrupt time table. The communication control unit 4, reception buffer 5, transmission buffer 6, control task 7, input data 8, output data 9, interrupt management unit 11, and frame table 12 are the same as those in the first embodiment. The interrupt time table 16 has three entries for calling the data transmission/reception unit 10 for transmitting the frames of the first-half slot group and for the frames in the second-half slot groups as shown in FIG. 17. In a global time 161, the communication cycle start time, control task start time, and partitioning point 22 are set.

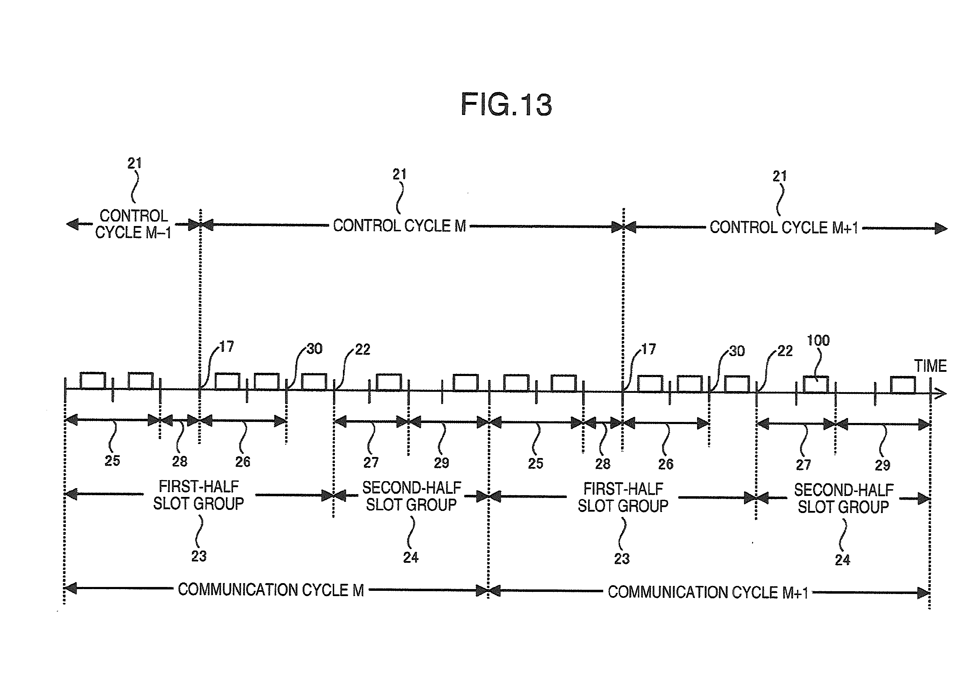

FIG. 13 shows the configuration of a communication cycle in the first embodiment. A communication cycle 19 includes one or more slots 20. Using the slot 20, at most one frame is communicated. A control task calculates a control task start time 17 in advance in such a way that a control task execution time 26 does not extend across the communication cycles and sets the calculated control task start time 17 in the interrupt time table 16.

The time from the control task start time 17 of communication cycle M to the control task start time 17 of communication cycle M+1 is a control cycle 21. The partitioning point 22 is the start time of the first slot of a second-half slot group 24. The partitioning point 22 is set after a control task end time 30. The transmission of the output data of the first-half slot group is executed from the partitioning point 22 to the end of a first-half slot group data transmission/reception unit execution time 27. The transmission of the output data of the second-half slot group is executed from the communication cycle start time to the end time of a second-half slot group data transmission/reception unit execution time 25. The first-half slot group data transmission/reception unit execution time 27 is proportional to the number of transmission frames included in the first-half slot group. The second-half slot group data transmission/reception unit execution time 25 is proportional to the number of transmission frames included in the second-half slot group. A slack time TA 28 is the time from the end time of the second-half slot group data transmission/reception unit execution time 25 to the control task start time 17. A slack time TB 29 is the time from the end time of the first-half slot group data transmission/reception unit execution time 27 to the communication cycle start time.

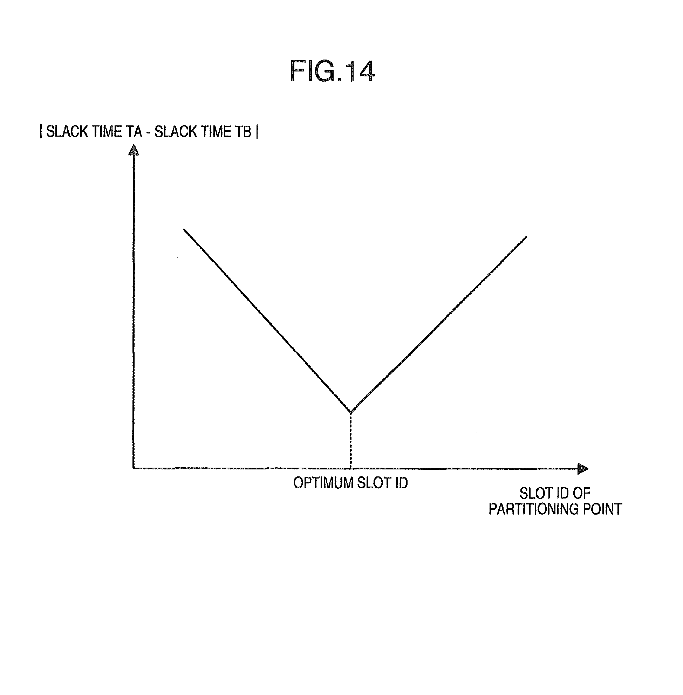

The partitioning point 22 is determined in advance so that |slack time TA- slack time TB| is minimized as shown in FIG. 14. This makes the slack time TA 28 and the slack time TB 29 equal, increasing the possibility of meeting the deadline of the data transmission/reception processing even when a delay such as an interrupt occurs.

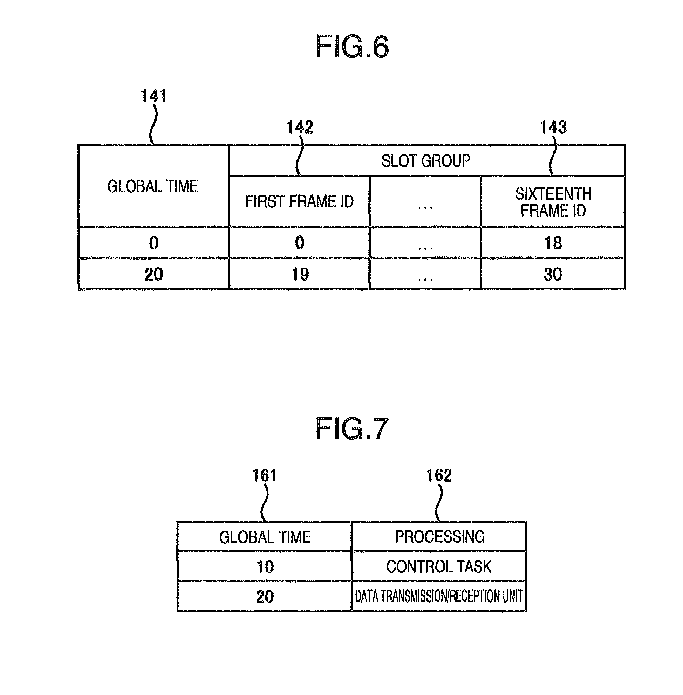

FIG. 6 shows the configuration of a slot group transmission/reception table 14. The slot group transmission/reception table 14 specifies the frame IDs of a slot group. The table has two entries, first-half slot group and second-half slot group, and specifies the frame IDs included in each slot group. Although 16 frames may be specified for one slot group in this embodiment, any number of frames equal to or larger than one may be specified. In addition, for each entry, a global timer 141 at which the data transmission/reception unit 10 is called is set. The time of the partitioning point is set for the global time 141 of the first-half slot group. The start time of a communication cycle, 0, is set for the global time 141 of the second-half slot group.

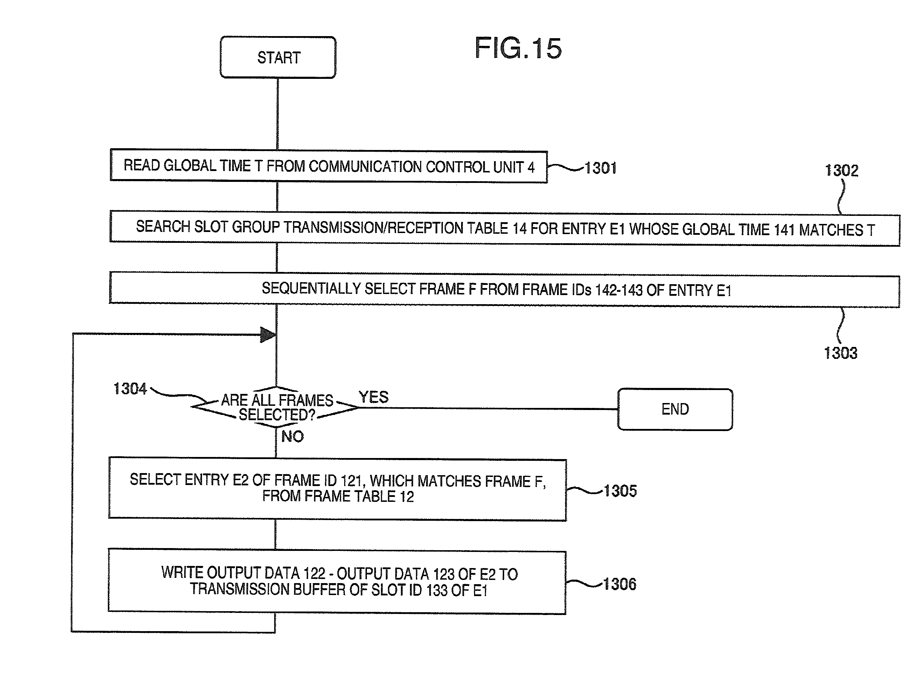

The data transmission/reception unit 10 transmits the output data 9 when called by the interrupt management unit 11. FIG. 15 shows the flowchart of the data transmission/reception unit 10. First, when called by the interrupt management unit 11, the data transmission/reception unit 10 reads the global time T from the communication control unit 4 (1301). Next, the data transmission/reception unit 10 searches the slot group transmission/reception table 14 for entry E1 whose global time 141 matches T (1302). Next, the data transmission/reception unit 10 sequentially selects a frame F from the frame IDs 142-143 of entry E1 (1303). Next, the data transmission/reception unit 10 creates a transmission frame from the output data 9 generated by the control task 7. More specifically, the data transmission/reception unit 10 selects entry E2 corresponding to the frame ID 121, which matches the frame F, from the frame table 12 (1305). After that, the data transmission/reception unit 10 writes output data 122 - output data 123 of entry E2 to the transmission buffer of a slot ID 133 of entry E1 (1306). After all frames F are selected, the data transmission/reception unit 10 terminates the processing (1304).

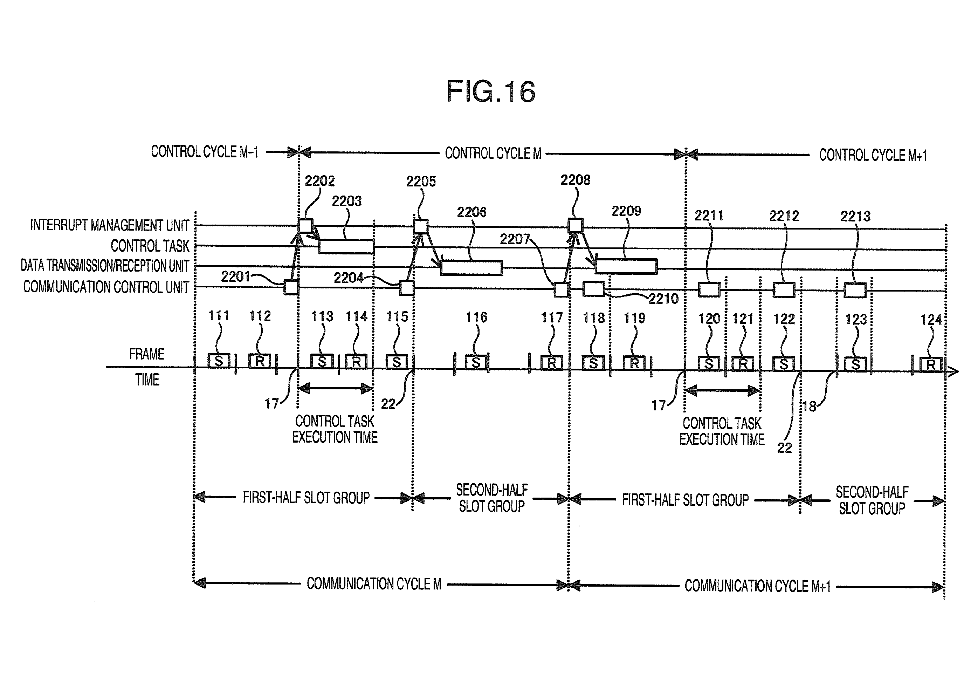

FIG. 16 shows the transmission sequence performed by the controller 1 in this embodiment from the time output data is output from the control task to the time a frame is transmitted. The reference numerals 118, 120, 122, and 123 indicate the transmission frames transmitted by the controller 1 in communication cycle M+1.

The following describes the transmission sequence of control cycle M. When the control task start time 17 arrives, the communication control unit 4 generates a global timer interrupt (2201) and, via the interrupt management unit 11 (2202), calls the control task (2203). The control task 7 completes the control operation and, after that, writes all data to be transmitted to other controllers as the output data 9. Because the control operation is completed, the data is guaranteed to be the output data 9 of control cycle M. Next, when the partitioning point 22 is reached, the communication control unit 4 generates the global interrupt (2204) and, via the interrupt management unit 11 (2205), calls the data transmission/reception unit 10 (2206). The data transmission/reception unit 10 writes the output data 9 to the transmission buffer 6 corresponding to the transmission frames 118, 120, and 122 included in the first-half slot group. Next, when the communication cycle start time is reached, the communication control unit 4 generates a global timer interrupt (2207) and, via the interrupt management unit 11 (2208), calls the data transmission/reception unit 10 (2209). The data transmission/reception unit 10 writes the output data 9 to the transmission buffer 6 corresponding to the transmission frame 123 included in the second-half slot group. When communication cycle M+1 is started, the communication control unit 4 transmits the frames in the transmission buffer 6 from the corresponding slots (2210, 2211, 2212, 2213). The frames 118, 120, and 122 are not transmitted until the end of 2206, the frame 123 is not transmitted until the end of 2209, and the frames transmitted in 2210-2213 includes only output data generated by the control task in control cycle M. Therefore, this sequence guarantees the synchronization of output data in one communication cycle.

### Second embodiment

In a second embodiment, an embodiment will be described in which the control cycle and the communication cycle are made to synchronize, the slots in the communication cycle are partitioned into two slot groups, and a data transmission/reception unit 10 is executed for each slot group to receive input data and transmit output data. The following describes this embodiment.

The system configuration of the second embodiment is the same as that of the first embodiment shown in FIG. 2.

The configuration of the communication cycle of the second embodiment is also the same as that of the first embodiment shown in FIG. 13. The difference is that, in addition the transmission of the output data of the first-half slot group, the reception of the input data of the first-half slot group is performed from the partitioning point 22 to the end of the first-half slot group data transmission/reception unit execution time 27. Also, in addition to the transmission of the output data of the second-half slot group, the reception of the input of the second-half slot group is performed from the communication cycle start time to the end time of the second-half slot group data transmission/reception unit execution time 25. The first-half slot group data transmission/reception unit execution time 27 is proportional to the number of frames included in the first-half slot group. The second-half slot group data transmission/reception unit execution time 25 is proportional to the number of frames included in the second-half slot group. The slack time TA 28 is the time from the end time of the second-half slot group data transmission/reception unit execution time 25 to the control task start time 17. The slack time TB 29 is the time from the end time of the first-half slot group data transmission/reception unit execution time 27 to the communication cycle start time.

The partitioning point 22 is determined in advance so that Islack time TA- slack time TB| is minimized as shown in FIG. 14. This makes the slack time TA 28 and the slack time TB 29 equal, increasing the possibility of meeting the deadline of the data transmission/reception processing even when a delay such as an interrupt occurs.

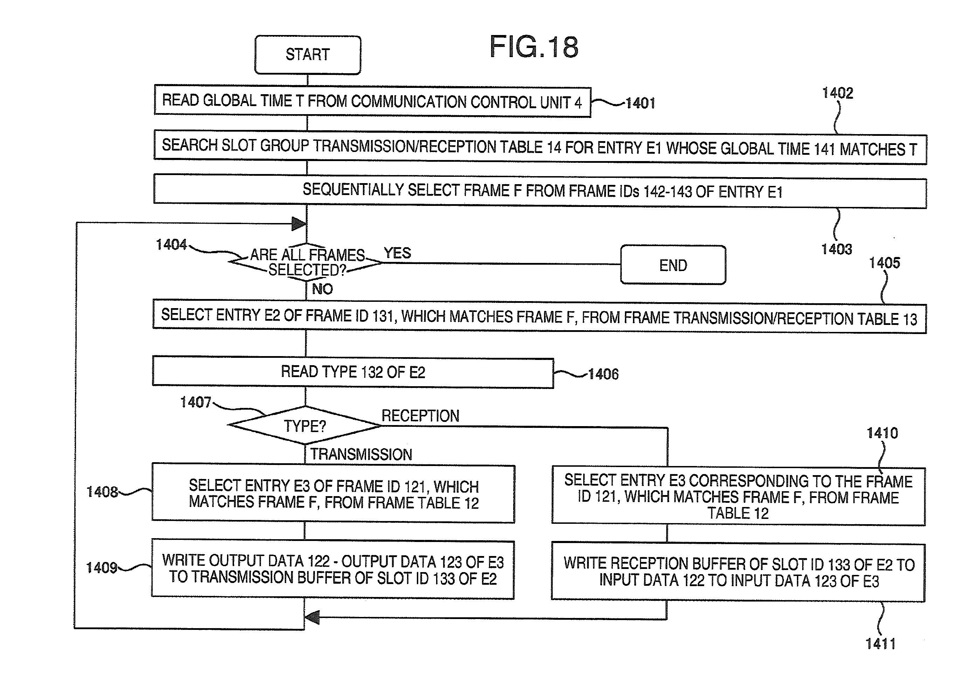

The data transmission/reception unit 10 transmits the output data 9 when called by the interrupt management unit 11. FIG. 18 shows the flowchart of the data transmission/reception unit 10. First, when called by the interrupt management unit 11, the data transmission/reception unit 10 reads the global time T from the communication control unit 4 (1401). Next, the data transmission/reception unit 10 searches the slot group transmission/reception table 14 for entry E1 whose global time 141 matches T (1402). Next, the data transmission/reception unit 10 sequentially selects a frame F from the frame IDs 142 and 143 of entry E1 (1403). Next, the data transmission/reception unit 10 selects entry E2 of a frame ID 131, which matches frame F, from the frame group transmission/reception table 13 (1405).

After that, the data transmission/reception unit 10 reads a type 132 of E2 (1406). If the type 132 is "transmission" (1407), the data transmission/reception unit 10 creates a transmission frame from the output data 9 generated by the control task 7. More specifically, the data transmission/reception unit 10 selects entry E3 corresponding to the frame ID 121, which matches the frame F, from the frame table 12 (1408).

After that, the data transmission/reception unit 10 writes output data 122 - output data 123 of entry E3 to the transmission buffer of a slot ID 133 of entry E2 (1409). If the type 132 is "reception" (1407), the data transmission/reception unit 10 reads a frame from the reception buffer 5 and reads the input data 8. More specifically, the data transmission/reception unit 10 selects entry E3 corresponding to the frame ID 121, which matches the frame F, from the frame table 12. After that, the data transmission/reception unit 10 writes the reception buffer of the slot ID 133 of entry E2 to the input data 122 to input data 123 of entry E3. After all frames F are selected, the data transmission/reception unit 10 terminates the processing (1404).

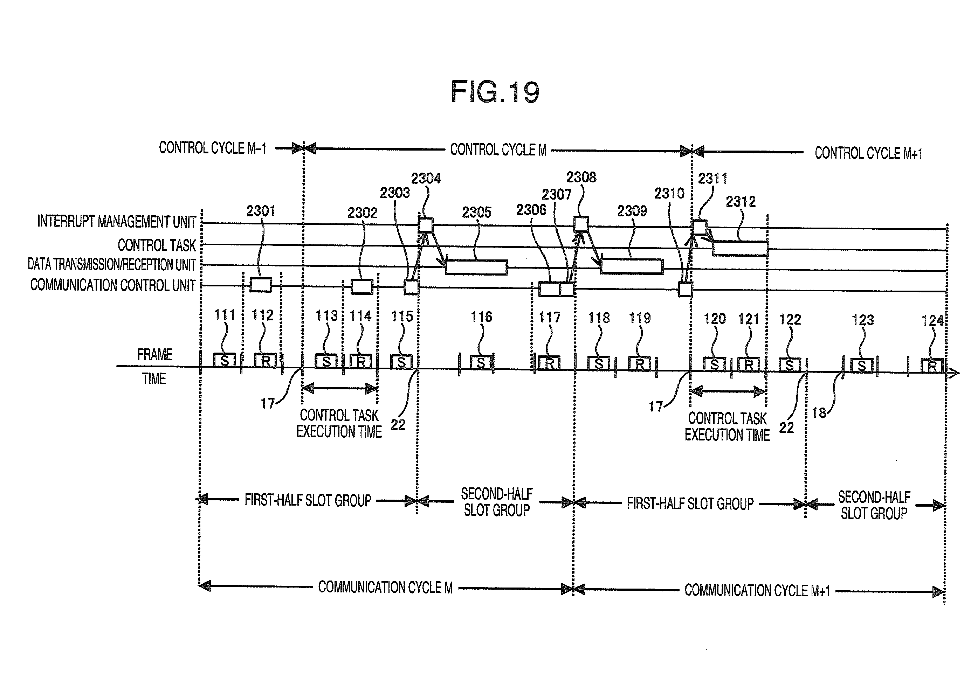

FIG. 19 shows the reception sequence performed by the controller 1 of this embodiment from the reception of a control task frame to the input of input data. The reference numerals 112, 114, and 117 indicate the reception frames the controller 1 receives in communication cycle M.

The following describes the reception sequence in communication cycle M. When communication cycle M is started, the communication control unit 4 receives a frame from the corresponding slot into the reception buffer 5(2301, 2302, 2306). Next, when the partitioning point 22 is reached, the communication control unit 4 generates a global timer interrupt (2303) and, via the interrupt management unit 11 (2304), calls the data transmission/reception unit 10 (2305). The data transmission/reception unit 10 writes data from the reception buffer 5, corresponding to the reception frames 112 and 114 included in the first-half slot group, to the input data 8. Next, when the communication cycle start time is reached, the communication control unit 4 generates a global timer interrupt (2307) and, via the interrupt management unit 11 (2308), calls the data transmission/reception unit 10 (2209). The data transmission/reception unit 10 writes data from the reception buffer 5, corresponding to the reception frame 117 included in the second-half slot group, to the input data 8. When the control task start time 17 is reached, the communication control unit 4 generates a global timer interrupt (2310) and, via the interrupt management unit 11 (2311), calls the control task (2312). Before the control operation is started, the control task 7 reads all data, received from other controllers, as the input data 8. The frames 112 and 114 are received before the start of 2305, the frame 117 is received before the start of 2309, and the frames received by 2301, 2302, and 2306 include only output data generated by the control task in control cycle M-1 of other controllers. Therefore, this sequence guarantees the input data synchronization in one communication cycle.

The transmission sequence in this embodiment, similar to that in the first embodiment, of course guarantees data synchronization.

### Third embodiment

In a third embodiment, an embodiment will be described in which the control cycle and the communication cycle are made to synchronize, an idle time 15 during which no data is transmitted/received is provided in an idle time in the communication cycle and, during the idle time, the data transmission/reception unit reads and writes all data. The idle time 15 in a communication cycle refers to a period of time from any time in the communication cycle to the end of the communication cycle. During this period, a frame is not transmitted/received using a slot in the idle time 15 or no slot is available in the idle time 15 (network idle time).

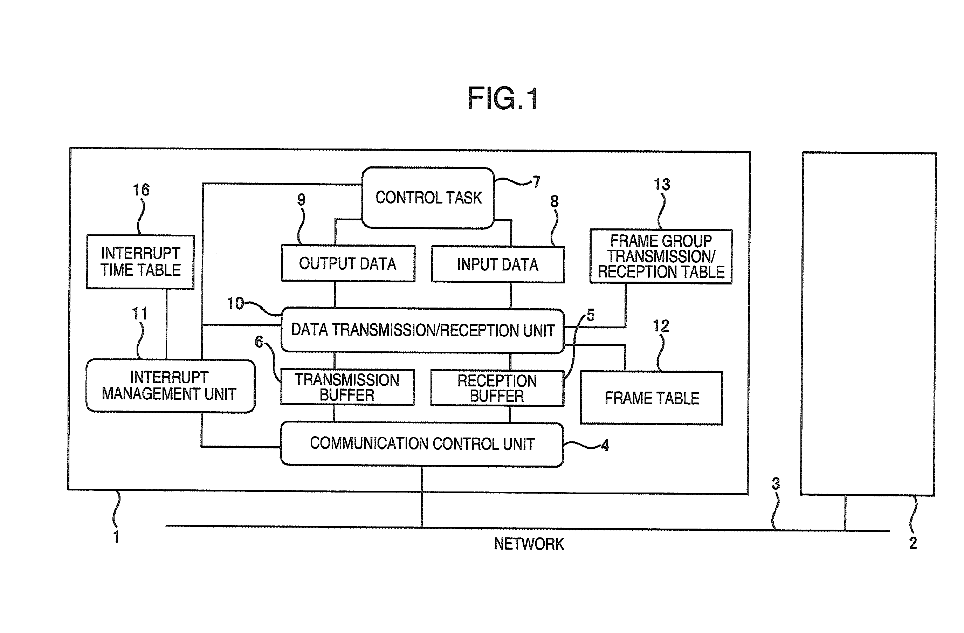

FIG. 1 shows the system configuration of the first embodiment. Controllers 1 and 2 are connected to a network 3. The number of controllers may be 3 or more. The controllers 1 and 2 each include a communication control unit 4, a reception buffer 5, a transmission buffer 6, a control task 7, input data 8, output data 9, a data transmission/reception unit 10, an interrupt management unit 11, a frame table 12, a frame group transmission/reception table 13, and an interrupt time table 16.

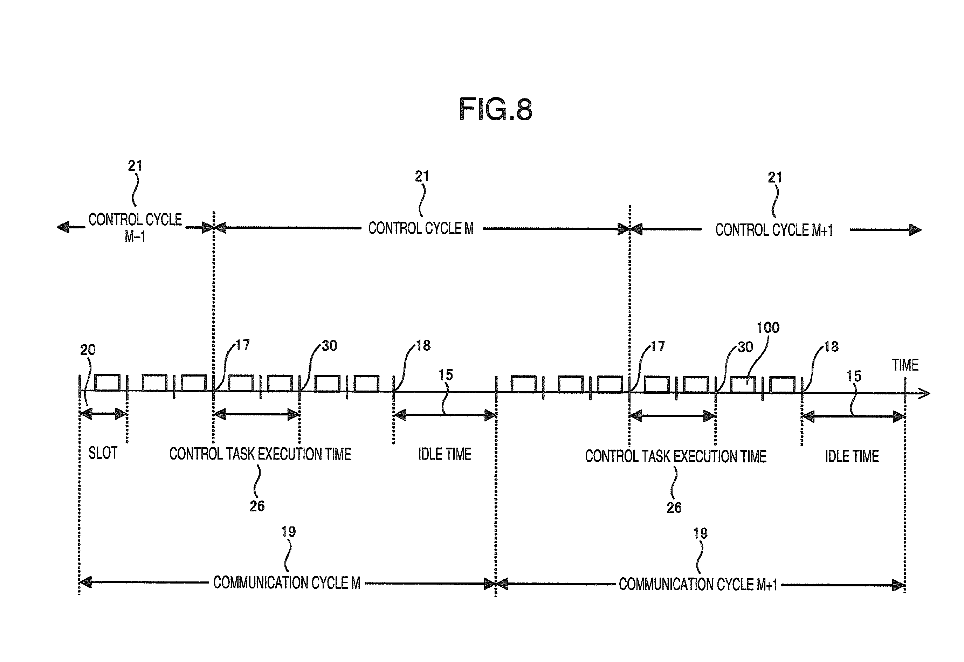

FIG. 8 shows the configuration of a communication cycle in the first embodiment. A communication cycle 19 includes one or more slots 20. Using the slot 20, at most one frame is communicated. The communication cycle 19 includes one idle time 15. In the idle time 15, no frame can be communicated. A frame includes control data on the vehicle on which the controller is mounted as well as the header that includes the frame ID and so on, and the trailer that includes a CRC and so on. The control data consists of the values received from various sensors, instruction values to be transmitted to various actuators, and the instruction values to be transferred among the control units. The idle time 15 lasts from an idle time start time 18 to the end time of the communication cycle 19. The control task calculates a control task start time 17 in advance so that the control task is executed in a range out of the idle time 15 and sets the calculated control task start time 17 in the interrupt time table 16. The time from the control task start time 17 in communication cycle M to the control task start time 17 in communication cycle M+1 is the control cycle 21.

The communication control unit 4, a piece of hardware that performs time-synchronized communication, has the function equivalent to that of the FlexRay communication controller. The communication control unit 4 has a global timer, a communication cycle counter, and a slot counter. The communication control units 4 of the controller 1 and the controller 2 exchange the communication cycles to always keep the same values. The slot counter is incremented with the start time of the communication cycle being 0. The communication control unit 4 has a filtering condition, composed of a communication cycle and a slot, for use when a frame is transmitted or received using the static segment. When the filtering condition for frame transmission matches the current communication cycle and slot, the communication control unit 4 transmits the transmission buffer 6 assigned for each frame. When the filtering condition for frame reception matches the communication cycle and slot, the communication control unit 4 receives a frame from the network 3 and saves it in the reception buffer 5 statically assigned for each frame. When performing frame transmission using the dynamic segment, the communication control unit 4 transmits the transmission buffer 6 when the filtering condition is satisfied and, in addition, a transmission request is output from the data transmission/reception unit. The other detailed configuration may be implemented using a known technology.

The communication control unit 4 is able to generate an interrupt when a pre-specified global time is reached. A global timer interrupt time should be set to the time at which the control task or the data transmission/reception unit 10 will be called. For the communication control unit 4 capable of setting only one global timer interrupt time, the interrupt management unit 11 sets the next interrupt time when an interrupt occurs.

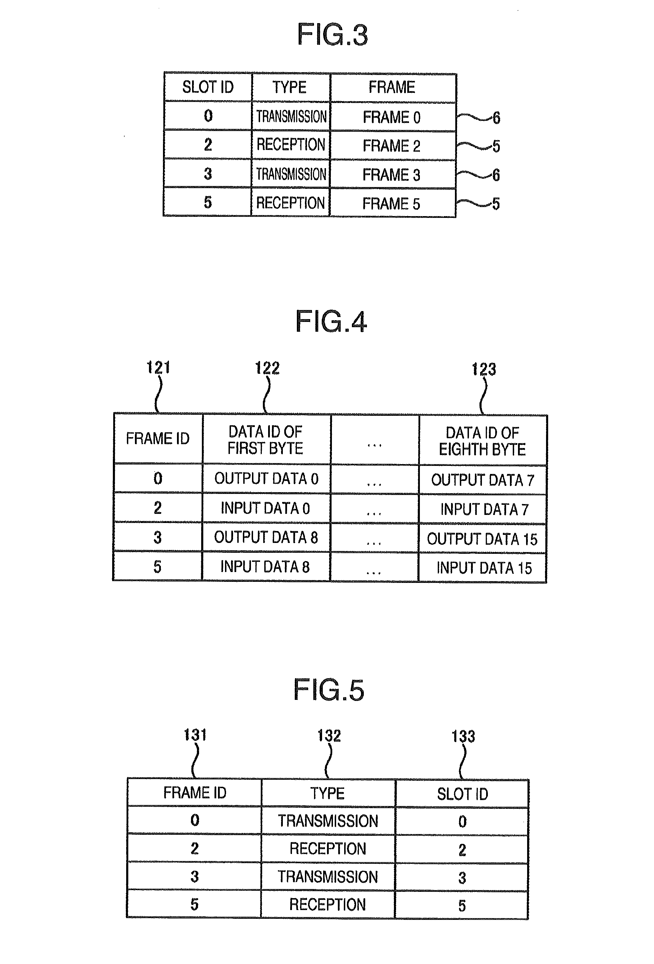

FIG. 3 shows the configuration of the transmission buffer 6 and the reception buffer 5. The table has an entry for each slot, in which one frame can be stored. The type "reception" indicates a reception buffer, while the type "transmission" indicates a transmission buffer.

The control task 7 is a program that controls the vehicle-mounted devices such as an engine and a brake. The control task is called by the interrupt management unit 11 at a pre-specified time in the communication cycle.

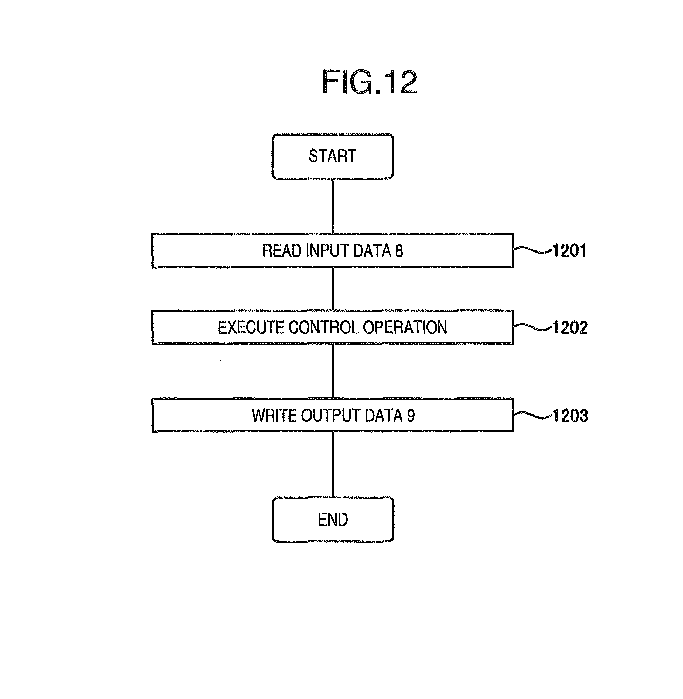

FIG. 12 shows the flowchart of the control task 7. When called, the control task 7 first reads the input data 8 (1201). Next, the control task 7 executes the control program of the vehicle-mounted devices with the input data 8 as the input (1202). Finally, the control task 7 writes the execution result of the control program to the output data 9 (1203). When called by the interrupt management unit 11, the data transmission/reception unit 10 transmits the output data 9 and receives the input data 8.

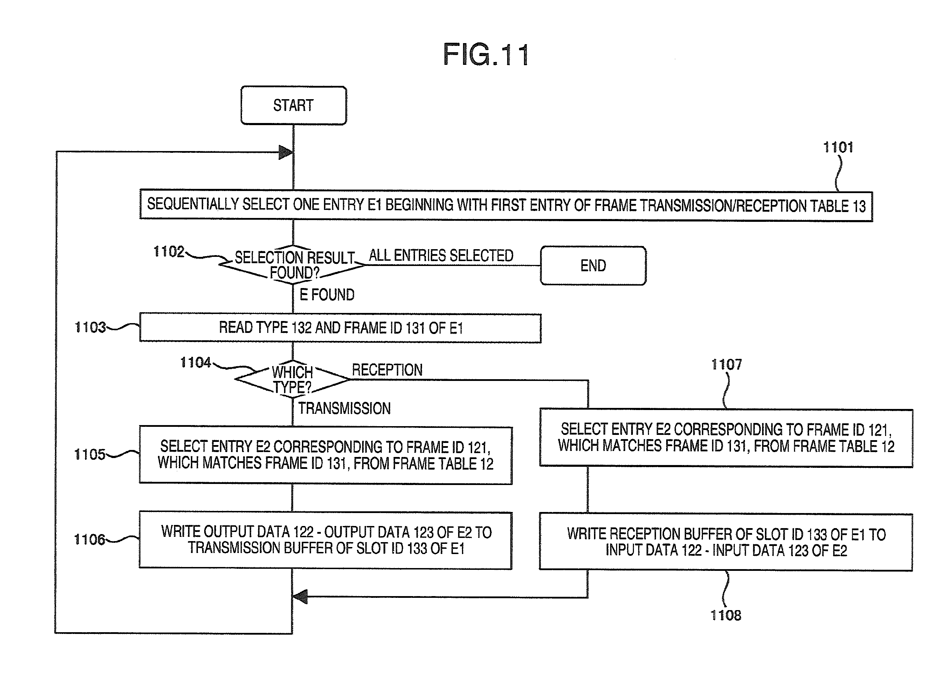

FIG. 11 shows the flowchart of the data transmission/reception unit 10. First, when called by the interrupt management unit 11, the data transmission/reception unit 10 sequentially selects entry E1 beginning with the first entry of the frame group transmission/reception table 13 (1101). If all entries of the frame group transmission/reception table 13 have been selected, the data transmission/reception unit 10 terminates the processing (1102). If entry E1 is found, the data transmission/reception unit 10 reads the frame ID 131 and the type 132 (1103). If the type 132 is "transmission" (1104), the data transmission/reception unit 10 creates a transmission frame from the output data 9 generated by the control task 7. More specifically, the data transmission/reception unit 10 selects entry E2 corresponding to the frame ID 121, which matches the frame ID 131, from the frame table 12 (1105). After that, the data transmission/reception unit 10 writes output data 122 - output data 123 of entry E2 to the transmission buffer of a slot ID 133 of entry E1 (1106). If the type 132 is "reception" (1104), the data transmission/reception unit 10 reads a frame from the reception buffer 5 to read the input data 8. More specifically, the data transmission/reception unit 10 selects entry E2 corresponding to the frame ID 121, which matches the frame ID 131, from the frame table 12. After that, the data transmission/reception unit 10 writes the reception buffer of the slot ID 133 of entry E1 to the input data 122 - input data 123 of entry E2.

The interrupt management unit 11 is an interrupt handler that calls the data transmission/reception unit 10 and the control task 7. The communication control unit 4 calls the interrupt management unit 11 when a global timer interrupt occurs.

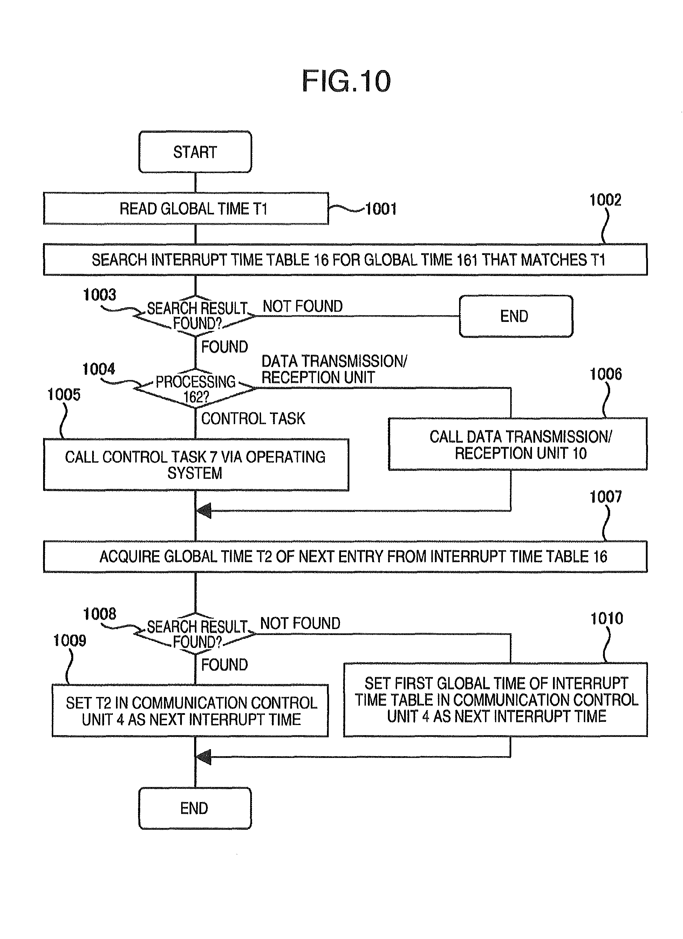

FIG. 10 shows the flowchart of the interrupt management unit. First, the interrupt management unit 11 reads global timer T1 (1101) and searches the interrupt time table 16 for a row that matches global time T1 (1002). The interrupt management unit 11 references processing 163 of the matching row (1004) and, if the processing is "control task", calls the control task (1005). The interrupt management unit 11 calls the task via the operating system. The most popular operating system of a vehicle-mounted system is OSEK. A task may be called under OSEK using a known technology. If the processing 163 is "data transmission/reception unit", the interrupt management unit 11 calls the data transmission/reception unit 10 (1006). The interrupt management unit 11 reads global time T2 from the next entry of the interrupt time table 16 (1007) and sets T2 as the global time of the global timer interrupt of the communication control unit 4 (1009). If the next entry is not found in the interrupt time table 16, the interrupt management unit 11 sets the first global timer interrupt time of the interrupt time table as the global time of the global timer interrupt of the communication control unit 4 (1010).

The frame group transmission/reception table 13 is a table that specifies a frame the controller 1 will transmit or receive. FIG. 5 shows the configuration. The table has an entry for each frame and specifies the frame ID 131, type 132, and slot ID 133. The type 132 indicates whether the frame is a "transmission" frame or a "reception" frame. The slot ID 133 specifies the slot that the frame specified by the frame ID uses. If the slot IDs correspond to the frame IDs on a one-to-one basis, the slot ID 133 is not necessary.

The frame table 12 is a table that specifies the configuration of a frame. FIG. 5 shows the configuration. The table has an entry for each frame and specifies the ID of data that is stored in each frame. The size of output data and input data, though fixed at one byte in this embodiment, may be specified on a bit or word basis. Although eight pieces of output data or input data are specified for each frame in this embodiment, any number equal to one or more may be specified.

The interrupt time table 16 is a table that specifies a global time 161, at which the communication control unit 4 should generate an interrupt, and a processing type 162 at that time. FIG. 7 shows the configuration of the interrupt time table 16. The interrupt time table 16 includes entries one of which is an entry whose processing is "control task". This entry allows the control task to be called in synchronization with a communication cycle. In addition, the table includes at least one entry whose processing is "data transmission/reception unit". In the global time 161 of this entry, the start time of the idle time 15 is set. The time of one slot is set to an integral multiple of the global time. For example, if one-slot time is ten times of the global time, the global time of the start time of the idle time 15 is calculated by the number of slots from the communication cycle start time to the idle time start time x 10. The value calculated in this way is set in advance in the global time 161. Using this value, the interrupt management unit 11 can call the data transmission/reception unit at the idle time start time.

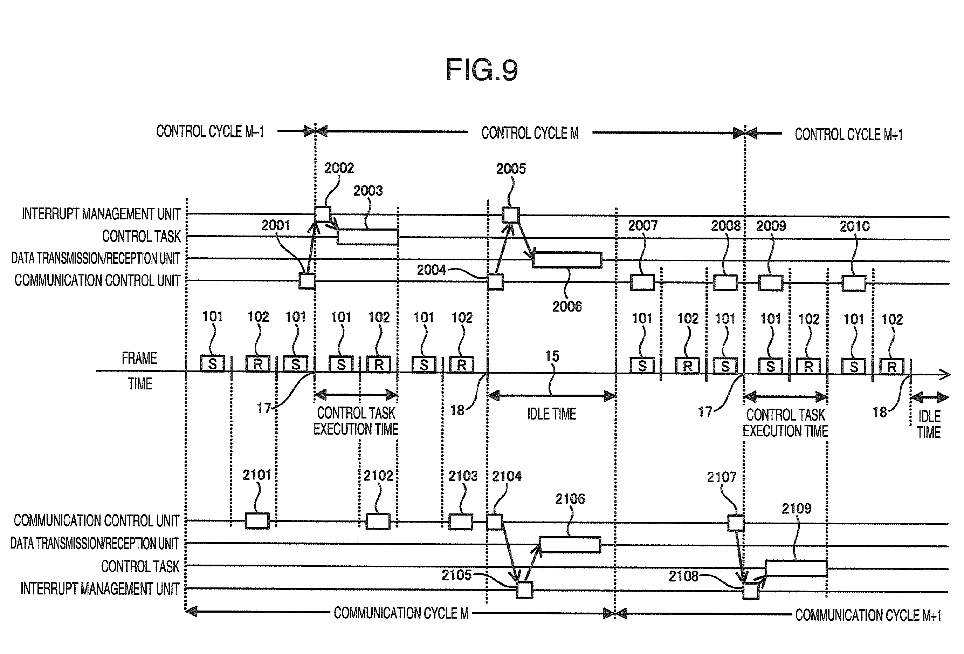

FIG. 9 shows the transmission sequence, which is executed from the time output data is output by the control task to the time frames are transmitted, and the reception sequence, which is executed from the time the frames are received to the time input data is received by the control task, in the controller 1 in this embodiment. The reference numeral 101 indicates a transmission frame transmitted by the controller 1, and the reference numeral 102 indicates a reception frame received by the controller 1.

First, the following describes the transmission sequence in control cycle M. When the control task start time 17 is reached, the communication control unit 4 generates a global timer interrupt (2001) and, via the interrupt management unit 11 (2002), calls the control task (2003). After completing the control operation, the control task 7 writes all data, which will be transmitted to other controllers, as the output data 9. Because the control operation is completed, all data in control cycle M is guaranteed to be the output data 9. Next, when the idle time start time 18 is reached, the communication control unit 4 generates a global timer interrupt (2004) and, via the interrupt management unit 11 (2005), calls the data transmission/reception unit 10 (2006). The data transmission/reception unit 10 writes all output data 9 to the transmission buffer 6. When communication cycle M+1 is started, the communication control unit 4 transmits the frames, included in the transmission buffer 6, from the corresponding slots (2007, 2008, 2009, 2010). No frame is transmitted from 2004 to the end of 2006 and, in addition, the frames transmitted in 2007-2010 include only output data generated by the control task in control cycle M. In this way, the sequence guarantees the synchronization of output data in one communication cycle.

Next, the following describes the reception sequence. First, when communication cycle M is started, the communication control unit 4 receives frames of the reception buffer 5 from the corresponding slots (2101, 2102, 2103). Next, when the idle time start time 18 is reached, the communication control unit 4 generates a global timer interrupt (2104) and, via the interrupt management unit 11 (2105), calls the data transmission/reception unit 10 (2106). The data transmission/reception unit 10 writes all reception buffer 5 to the input data 8. Because no new reception frame is received during 2106, all frames in the reception buffer 5 are guaranteed to be the frames received in communication cycle M. When the control task start time 17 of communication cycle M+1 is reached, the communication control unit 4 generates a global timer interrupt (2107) and, via the interrupt management unit 11 (2108), calls the control task (2109). Before the control operation, the control task 7 reads all data, received from other controllers, as the input data 8. Because the data is read before the control operation, the input data 8 is guaranteed to be the input data 8 of the reception frames received in communication cycle M. The transmission sequence guarantees that the synchronization of reception frames can be maintained in one control cycle, thus guaranteeing the synchronization of input data in one control cycle.

In the first embodiment, second embodiment, and third embodiment, the transmission and reception of all input data and output data is executed in one control cycle to guarantee data synchronization.

In the third embodiment, the data transmission/reception unit and the communication control unit read and write data from and to the transmission buffer and the reception buffer exclusively. Therefore, input data can be read, and output can be written, reliably within one control cycle.

In particular, the first embodiment does not require the idle time 15 regardless of the data amount of input data and output data. This means that the network resources can be used efficiently. In addition, the partitioning point is determined so that Islack time TA-slack time TB| is minimized. This makes equal the deadline of the data transmission/reception unit processing of the first-half slot group and the deadline of the data transmission/reception unit processing of the second-half slot group, decreasing the possibility that the deadline of the data transmission/reception processing cannot be met due to a delay such as an interrupt.

### REFERENCE SIGNS LIST

- 1,2: Controller
- 3: Network
- 4: Communication control unit
- 5: Reception buffer
- 6: Transmission buffer
- 7: Control task
- 8: Input data
- 9: Output data
- 10: Data transmission/reception unit
- 11: Interrupt management unit
- 12: Frame table
- 13: Frame group transmission/reception table
- 14: Slot group transmission/reception table
- 15: Idle time
- 16: Interrupt time table
- 17: Control task start time
- 18: Idle time start time
- 19: Communication cycle
- 20: Slot
- 21: Control cycle
- 22: Partitioning point
- 23: First-half slot group
- 24: Second-half slot group
- 25: Second-half slot group data transmission/reception unit execution time
- 26: Control task execution time
- 27: First-half slot group data transmission/reception unit execution time
- 28: Slack time TA
- 29: Slack time TB
- 30: Control task end time
- 100: Frame
- 101: Transmission frame
- 102: Reception frame
- 161: Global time
- 162: Processing type
- 200: Slot group
- 1301, 1302, 1303, 1304:
- , 1305, 1306, 1401, 1402, 1403:
- , 1404, 1405, 1406, 1407:
- , 1408, 1409, 1410: Flowchart
- 2001,2002,2003:
- ,2004,2005,2006,2007,:
- 2008,2009,2010,2101,2102:
- ,2103,2104,:
- 2105,2106,2107:
- ,2108,2109,2201,2202:
- ,2203,2204,2205,2206:
- ,2207,2208,2209,2210,:
- 2211,:
- 2212, 2213, 2301:
- , 2302, 2303, 2304, 2305:
- , 2306, 2307, 2308, 2309:
- , 2310, 2311, 2312: Lifeline in sequence diagram

## Claims

1. A vehicle-mounted network device wherein a plurality of nodes are connected to a common network, each of said nodes includes a transmission buffer, a reception buffer, and communication control means, communication is performed in a fixed-period communication cycle, the communication cycle includes a plurality of slots each generated by dividing the communication cycle into a pre-specified communication time, and said communication control means uses a time division multiplex communication system that transmits and receives a frame, in which vehicle control data is included, via a pre-specified slot, wherein
said communication control means performs transmission by reading from a transmission buffer and transmitting to a pre-specified slot and said communication control means performs reception by writing a frame in a pre-specified slot to a reception buffer,
said node has a control task and data transmission/reception means and said control task is called at a pre-specified time in a communication cycle to receive input data, to perform control, and to transmit output data and is executed in a control cycle that synchronizes with the communication cycle,
said data transmission/reception means receives input data by performing a pre-specified conversion for a frame in a pre-specified reception buffer to generate input data,
said data transmission/reception means transmits output data by performing a pre-specified conversion for output data to generate a frame and writing the frame into a pre-specified transmission buffer,
said plurality of slots are divided into two, a first-half slot group and a second-half slot group, each composed of a set of one or more consecutive slots, and
said data transmission/reception means performs transmission of output data corresponding to the first-half slot group of a certain communication cycle during a time allocated to the slots in the second-half slot group of the certain communication cycle and performs transmission of output data corresponding to the second-half slot group of the certain communication cycle during a time allocated the slots of the first-half slot group of a next communication cycle of the certain communication cycle.

2. The vehicle-mounted network device according to claim 1 wherein
reception of input data corresponding to the first-half slots of the next communication cycle is performed during a time allocated to the second-half slots of the certain communication cycle and
reception of input data corresponding to the second-half slot group of the certain communication cycle is performed during a time allocated to the first-half slots of the certain communication cycle.

3. A vehicle-mounted network device, wherein
a plurality of nodes are connected to a common network, each of said node includes a transmission buffer, a reception buffer, and communication control means,
communication in said network is performed in a fixed-period communication cycle,
the communication cycle includes a plurality of slots each generated by dividing the communication cycle into a pre-specified communication time, and
said communication control means uses a time division multiplex communication system that transmits and receives a frame, in which vehicle control data is included, via a pre-specified slot, wherein
said communication control means performs transmission by reading from a transmission buffer and transmitting to a pre-specified slot and said communication control means performs reception by writing a frame in a pre-specified slot to a reception buffer,
said node has a control task and data transmission/reception means,
said control task is called at a pre-specified time in a communication cycle to receive input data, to perform control, and to transmit output data and is executed in a control cycle that synchronizes with the communication cycle,
said data transmission/reception means receives input data by performing a pre-specified conversion for a frame in a pre-specified reception buffer to generate input data,
said data transmission/reception means transmits output data by performing a pre-specified conversion for output data to generate a frame and writing the frame into a pre-specified transmission buffer,
the communication cycle has an idle time during which no frame is transmitted/received from a time in the communication cycle to the end time of the communication cycle or in which there is no slot in the idle time,
the control task execution time is in a range other than the idle time and the start time of the control task is set so that the execution time of the control task does not extend across the communication cycle, and
the data transmission/reception means writes all output data, generated by the control task in a certain communication cycle, to a transmission buffer during the idle time of the certain communication cycle and said communication control means transmits the output data in a next communication cycle of the certain communication cycle.

4. The vehicle-mounted network device according to claim 3 wherein
in the idle time, said data transmission/reception means receives all input data, which will be used in the next communication cycle, in the certain communication cycle.
